# EUROPEAN PATENT SPECIFICATION

(11) **EP 3 015 723 B1**
(45) Date of publication and mention of the grant of the patent: **10.10.2018**
(21) Application number: 15182421.6
(22) Date of filing: 25.08.2015
(51) Int. Cl.: F16C 7/02, F16C 33/20

(54) **CONNECTING ROD, INTERNAL COMBUSTION ENGINE, AUTOMOTIVE VEHICLE, AND PRODUCTION METHOD FOR CONNECTING ROD**
VERBINDUNGSSTANGE, BRENNKRAFTMASCHINE, KRAFTFAHRZEUG UND HERSTELLUNGSVERFAHREN FÜR VERBINDUNGSSTANGE
BIELLE, MOTEUR À COMBUSTION INTERNE, VÉHICULE AUTOMOBILE ET PROCÉDÉ DE PRODUCTION DE BIELLE

(30) Priority: 28.10.2014 JP 2014219580
(43) Date of publication of application: 04.05.2016
(73) Proprietor: Yamaha Hatsudoki Kabushiki Kaisha, Shizuoka-ken Shizuoka 438-8501 (JP)
(72) Inventor: Miura, Tetsu, Shizuoka-ken, Shizuoka 438-8501 (JP); Kojima, Yuuki, Shizuoka-ken, Shizuoka 438-8501 (JP); Doi, Kosuke, Shizuoka-ken, Shizuoka 438-8501 (JP); Kubota, Tsuyoshi, Shizuoka-ken, Shizuoka 438-8501 (JP); Miyake, Hisanori, Shizuoka-ken, Shizuoka 438-8501 (JP); Arino, Mamoru, Shizuoka-ken, Shizuoka 438-8501 (JP)
(74) Representative: Moreland, David

(56) References cited:
- EP-A2- 1 724 476
- EP-A2- 1 903 229
- EP-A2- 2 246 582
- DE-A1-102005 061 063
- DE-A1-102006 013 399
- GB-A- 2 338 995
- JP-A- 2006 308 027
- JP-A- 2006 322 599
- US-A1- 2004 064 949

## Description

### FIELD OF INVENTION

The present invention relates to a connecting rod, e.g. an engine connecting rod, and more particularly to a titanium-alloy connecting rod and a production method thereof. The present invention also relates to an internal combustion engine and an automotive vehicle, such as a straddle-type vehicle or saddle-ride type vehicle that includes such a connecting rod.

### BACKGROUND TO INVENTION

Conventionally, steels have widely been used as a material for connecting rods (also known as "con-rods"). In recent years, use of a titanium alloy has been proposed in order to reduce the weight of a connecting rod. A titanium-alloy connecting rod is disclosed in Japanese Laid-Open Patent Publication No. 2007-3000, and in the German Patent Application DE 10 2006 013 399 for example.

A piston pin is to be inserted in a throughhole (piston pin hole) that is made in the small end of a connecting rod. In order to prevent seizing, a bushing is provided between the inner peripheral surface of the small end and the piston pin.

A rolled bushing which is formed by rolling a metal plate is often used as the bushing. A known specific construction of a rolled bushing is where powder of a copper alloy is sintered onto the inner peripheral surface of a metal cylindrical back formed of steel. Moreover, a solid bushing which is carved out of a copper alloy is often used for a titanium-alloy connecting rod.

However, use of such a bushing leads to an increased production cost. In particular, solid bushings are expensive.

One technique of improving the anti-seizing property of the small end of a titanium-alloy connecting rod without using a bushing might be conducting an oxidation treatment to form a titanium oxide layer on the inner peripheral surface of the small end. However, an oxidation treatment is performed by heating a connecting rod to a high temperature (e.g., 700 to 720°C), thus inducing strain. Strain may cause seizing or wear.

The present invention has been made in view of the above problems, and an objective of at least one embodiment of at least one aspect of the invention is to suitably improve the anti-seizing property of the small end of a titanium-alloy connecting rod.

It is an object of at least one embodiment of at least one aspect of the present invention to obviate or at least mitigate one or more problems or disadvantages in the prior art.

### SUMMARY OF INVENTION

Various aspects of the present invention are defined in the independent claims. Some preferred features are defined in the dependent claims.

A connecting rod according to a first aspect of the present invention is a connecting rod of a split type, which is made of a titanium alloy. The connecting rod comprises: a rod main body; a small end, which is provided at one end of the rod main body; and a big end, which is provided at another end of the rod main body. The connecting rod further comprise a chromium nitride layer, which is formed at least on a all of an inner peripheral surface of the small end.
The chromium nitride layer is formed on an inner peripheral surface of the big end.
The chromium nitride layer may be formed on a thrust surface of the big end.

The chromium nitride layer, which is formed on the inner peripheral surface of the small end has a thickness distribution such that the chromium nitride layer is relatively thick along a longitudinal direction of the connecting rod and relatively thin along a width direction of the connecting rod. The thickness of the chromium nitride layer, in the regions where the inner peripheral surface of the small end intersects a plane, e.g. an imaginary plane, that contains the center axis of a piston pin hole and which is parallel to a longitudinal direction of the rod main body is greater than the thickness of the chromium nitride layer in the regions where the inner peripheral surface of the small end intersects a plane, e.g. an imaginary plane, that contains the center axis of the piston pin hole and that is parallel to the width direction of the rod main body.

The titanium alloy may be or comprise an alloy of titanium and aluminium and/or iron, e.g.Ti-5Al-1Fe alloy.

An internal combustion engine according to a second aspect of the present invention comprises a connecting rod of the above construction, e.g. according to the first aspect.

The internal combustion engine of the above construction may further comprise a piston pin, which may be inserted in the piston pin hole of the small end of the connecting rod. The piston pin may have a carbon film, such as a diamond-like carbon film, on a surface thereof.

An automotive vehicle, such as a saddle-ride or straddle-type vehicle, according to a third aspect of the present invention comprises an internal combustion engine of the above construction, e.g. according to the second aspect.

A production method for a connecting rod according to an embodiment of the present invention comprises step (a) of forming a connecting rod from a titanium alloy, the connecting rod including a rod main body, a small end provided at one end of the rod main body and a big end provided at another end of the rod main body; and step (b) of forming a chromium nitride layer at least on all of an inner peripheral surface of the small end.

At step (b), the chromium nitride layer may be formed on an inner peripheral surface of the big end.

Step (a) may comprise step (c) of applying a cutting process to the inner peripheral surface of the big end, e.g. to ensure that the inner peripheral surface of the big end has a ten point-average roughness Rz of 6.3 µm or less.

At step (b), the chromium nitride layer may also be formed also on a thrust surface of the big end.

At step (b), the chromium nitride layer is formed on the inner peripheral surface of the small end with a thickness distribution such that the chromium nitride layer is relatively thick along a longitudinal direction of the connecting rod and relatively thin along a width direction of the connecting rod.

Step (a) may comprise step (d) of shaping the titanium alloy, e.g. via forging.

Step (a) may comprise step (e) of performing an annealing treatment, which may be after step (d).

Step (a) may comprise step (f) of removing α case having occurred on a surface of the titanium alloy, e.g. by shot peening, which may be after step (d). The α case may be an oxygen-concentrated layer of or on the titanium alloy.

Step (b) may be conducted while the surface of the connecting rod is at least partly a surface as forged.
The big end of the connecting rod may be split into a rod portion continuing from the other end of the rod main body and a cap portion for coupling to the rod portion: Step (b) may be conducted with the cap portion being coupled to the rod portion with a bolt.

In a connecting rod according to an embodiment of the present invention, a chromium nitride layer is formed at least on the inner peripheral surface of the small end, whereby the anti-seizing property of the small end may be improved. This may make it possible to omit any bushing to be provided between the inner peripheral surface of the small end and the piston pin, which may thus reduce the production cost. Since it is unnecessary to perform a high-temperature heating as in a oxidation treatment, seizing or wear due to strain may be prevented.

Forming the chromium nitride layer also on the inner peripheral surface of the big end may allow an anti-fretting property of the inner peripheral surface of the big end to be improved.

Forming the chromium nitride layer also on a thrust surface of the big end may allow the anti-seizing property of the thrust surface to be improved.

The chromium nitride layer formed on the inner peripheral surface of the small end has a thickness distribution such that the chromium nitride layer is relatively thick along the longitudinal direction of the connecting rod and relatively thin along the width direction of the connecting rod. This may allow for easy introduction of a lubricant in between the inner peripheral surface of the small end and the piston pin, thus better preventing seizing (galling).

Ti-5Al-1 Fe alloy, for example, may be suitably used as the titanium alloy that is the material of the connecting rod. Since Ti-5Al-1 Fe alloy may be relatively inexpensive, using Ti-5Al-1 Fe alloy as the connecting rod material may reduce the production cost. Moreover, Ti-5Al-1 Fe alloy may excel in the balance between processibility and strength.

A connecting rod according to an embodiment of the present invention may suitably improve the anti-seizing property of the small end, and therefore may be suitably used in various internal combustion engines (engines), e.g. for automotive vehicles, such as saddle-ride or straddle-type vehicles, and other mechanical applications.

The piston pin of the internal combustion engine may have a carbon film, e.g. a diamond-like carbon film, on its surface, which may make for lower friction, and thus enhanced performance and/or extended mileage of the internal combustion engine. The carbon film may comprise a diamond-like atomic structure or a derivative thereof.

A production method for a connecting rod (or method of producing a connecting rod) according to an aspect of the present invention may comprise: step (a) providing a titanium alloy connecting rod or of forming from a titanium alloy a connecting rod. The connecting rod comprises a rod main body, a small end, and a big end. The method comprises a step (b) of forming a chromium nitride layer, at least on all of the inner peripheral surface of the small end. Thus, the anti-seizing property of the small end may be improved. This may make it possible to omit any bushing to be provided between the inner peripheral surface of the small end and the piston pin, thus reducing the production cost. Since it may be unnecessary to perform a high-temperature heating as in a oxidation treatment, seizing or wear due to strain may be prevented.

In step (b), forming the chromium nitride layer also on the inner peripheral surface of the big end may allow the anti-fretting property of the inner peripheral surface of the big end to be improved.

Step (a) may comprise step (c) of applying a cutting process to the inner peripheral surface of the big end to ensure that the inner peripheral surface of the big end may have a ten point-average roughness Rz of 6.3 µm or less. By forming the nitride layer, e.g. the chromium nitride layer, so that the ten point-average roughness Rz of the inner peripheral surface of the big end falls within the aforementioned range, the friction coefficient may be kept in an appropriate range, which may thereby prevent the bearing metal from rotating together. Moreover, an even higher anti-fretting property may be obtained with an increased surface hardness.

In step (b), forming the chromium nitride layer also on a thrust surface of the big end may allow the anti-seizing property of the thrust surface to be improved.

In step (b), the chromium nitride layer is formed on the inner peripheral surface of the small end with a thickness distribution such that the chromium nitride layer is relatively thick along the longitudinal direction of the connecting rod and relatively thin along the width direction of the connecting rod. This may allow for easy introduction of a lubricant in between the inner peripheral surface of the small end and the piston pin, thus better preventing seizing (galling).

Step (a) may comprise step (d) of shaping the titanium alloy via forging. By shaping the titanium alloy via forging, a connecting rod with good mechanical properties may be obtained.

Step (a) may comprise step (e) of conducting an annealing treatment, after step (d). By conducting an annealing treatment, any residual stress occurring at step (d) (i.e., a residual stress that unfavorably affects accuracy of dimension) may be eliminated.

Step (a) may comprise step (f) of removing α case having occurred on the surface of the titanium alloy, e.g. by shot peening, after step (d). α case may be an oxygen-concentrated layer which may unfavorably affect processibility, ductility, fatigue characteristics, and so on, which may therefore is preferably be removed through step (f). Shot peening may also introduce residual stress to the connecting rod, which may thereby enhance the strength of the connecting rod.

Step (b) may be conducted while the surface of the connecting rod may be partly a surface as forged.

In the case, where the big end of the connecting rod may be split into a rod portion and a cap portion, step (b) may be conducted with the cap portion being coupled to the rod portion with a fitting member, such as a bolt. Conducting step (b) in such a state may allow the bearing surface and the screw surface to be masked by the fixing member, e.g. bolt.

According to an embodiment of the present invention, the anti-seizing property of the small end of a titanium-alloy connecting rod may be suitably improved.

These general and specific aspects may be implemented using a system, a method, and a computer program, and any combination of systems, methods, and computer programs.

Additional benefits and advantages of the disclosed embodiments will be apparent from the specification and Figures. The benefits and/or advantages may be individually provided by the various embodiments and features of the specification and drawings disclosure, and need not all be provided in order to obtain one or more of the same.

It will be appreciated that features analogous to those described in relation to any of the above aspects may be individually and separably or in combination applicable to any of the other aspects.

Apparatus features analogous to, or configured to implement, those described above in relation to a method and method features analogous to the use and fabrication of those described above in relation to an apparatus are also intended to fall within the scope of the present invention.

### BRIEF DESCRIPTION OF DRAWINGS

An embodiment of the present invention will now be described, by way of example only, with reference to the accompanying drawings, which are:
- **Figures 1A and 1B**: diagrams showing a connecting rod 1 according to an embodiment of the present invention. Figure 1A is a plan view showing the entire connecting rod 1; and Figure 1B is a partially cutaway plan view showing the neighbourhood of a big end 30 of the connecting rod 1;
- **Figures 2A, 2B and 2C**: cross-sectional views showing the neighbourhood of an inner peripheral surface 20i of a small end 20, the neighbourhood of an inner peripheral surface 30i of a big end 30, and the neighbourhood of a thrust surface 30t, respectively;
- **Figure 3**: an enlarged plan view showing the small end 20;
- **Figure 4**: an enlarged cross-sectional view showing the small end 20;
- **Figure 5**: a diagram showing a method of forming a chromium nitride layer 50;
- **Figure 6**: a graph showing the longitudinal thickness and lateral thickness of the chromium nitride layer 50, as obtained when actually forming the chromium nitride layer 50 by the method shown in Figure 5;
- **Figure 7**: a cross-sectional view schematically showing an engine 100 including a connecting rod 1 according to an embodiment of the present invention; and
- **Figure 8**: a side view schematically showing a motorcycle including the engine 100 shown in Figure 7.

### DETAILED DESCRIPTION OF DRAWINGS

Hereinafter, with reference to the drawings, embodiments of the present invention will be described. Note that the present invention is not limited to the following embodiments.

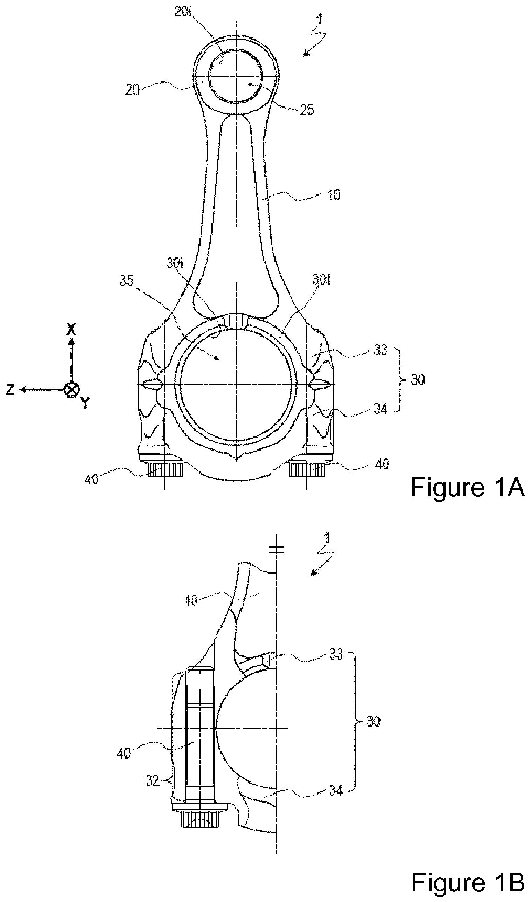

Figure 1 shows a connecting rod 1 according to an embodiment of the present invention. Figure 1A is a plan view showing the entire connecting rod 1; and Figure 1B is a partially cutaway plan view showing the neighbourhood of a big end 30 of the connecting rod 1.

The connecting rod 1 is made of a titanium alloy. As the titanium alloy, Ti-5AI-1 Fe alloy can be suitably used, for example. Ti-5Al-1Fe alloy is a titanium alloy containing about 5 mass% of Al and about 1 mass% of Fe. Since Ti-5Al-1Fe alloy is relatively inexpensive, using Ti-5Al-1Fe alloy as the material of the connecting rod 1 can reduce the production cost. Moreover, Ti-5Al-1Fe alloy excels in the balance between processibility and strength. It will be appreciated that the material of the connecting rod 1 is not limited to Ti-5AI-1 Fe alloy, but titanium alloys of various known compositions can be used (e.g., Ti-6AI-4V alloy, which is a titanium alloy containing about 6 mass % aluminium and about 4 mass % vanadium).

As shown in Figures 1A and 1B, the connecting rod 1 includes a bar-like rod main body 10, a small end 20 provided at one end of the rod main body 10, and a big end 30 provided at another end of the rod main body 10.

The small end 20 has a throughhole (called a "piston pin hole") 25 for allowing a piston pin to extend therethrough. On the other hand, the big end 30 has a throughhole (called a "crankpin hole") 35 for allowing a crankpin to extend therethrough.

In the following description, the direction in which the rod main body 10 extends will be referred to as "the longitudinal direction" (i.e., direction X in the figure), and the direction of a center axis of the piston pin hole 25 and the crankpin hole 35 will be referred to as the "axial direction" (i.e., direction Y in the figure). The direction which is orthogonal to the longitudinal direction and the axial direction will be referred to as the "width direction" (direction Z in the figure).

The big end 30 is split into a rod portion 33 which continues from the other end of the rod main body 10, and a cap portion 34 which is coupled to the rod portion 33. In other words, the connecting rod 1 is a split-type connecting rod. The split-type connecting rod 1 is formed by a fracture technique, for example. The fracture technique is a technique of integrally forming a big end 30 and then splitting the big end 30 into a rod portion 33 and a cap portion 34 via brittle fracture. The split-type connecting rod 1 may also be formed by other techniques. Specifically, the rod portion 33 and the cap portion 34 may be formed as separate pieces, or, the big end 30 may be integrally formed and then cut up via machining.

The connecting rod 1 further includes bolts 40 with which the cap portion 34 is coupled to the rod portion 33. The bolts 40 are screwed into bolt holes 32 which are made in the big end 30.

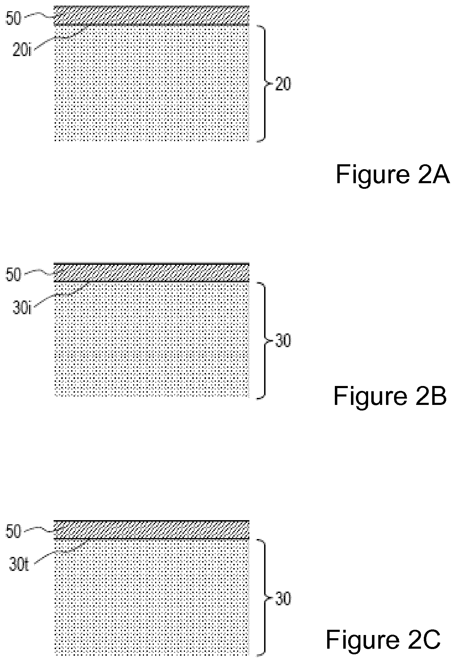

Figures 2A, 2B and 2C show the neighbourhood of an inner peripheral surface 20i of the small end 20, the neighbourhood of an inner peripheral surface 30i of the big end 30, and the neighbourhood of a thrust surface 30t in cross-sectional structure, respectively. As shown in Figure 2A, the connecting rod 1 includes a chromium nitride (CrN) layer 50 which is formed on the inner peripheral surface 20i of the small end 20. Moreover, as shown in Figure 2B, the chromium nitride layer 50 is also formed on the inner peripheral surface 30i of the big end 30. Furthermore, as shown in Figure 2C, the chromium nitride layer 50 is also formed on the thrust surface 30t of the big end 30.

As described above, in the connecting rod 1 according to an embodiment of the present invention, the chromium nitride layer 50 is formed on the inner peripheral surface 20i of the small end 20, thereby improving the anti-seizing property of the small end 20 (or more specifically, the inner peripheral surface 20i of the small end 20). Therefore, in the connecting rod 1 according to an embodiment of the present invention, there is no need to provide a bushing between the inner peripheral surface 20i of the small end 20 and the piston pin. Omission of a bushing leads to a reduction in production cost. Since it is unnecessary to perform a high-temperature heating as in a oxidation treatment, seizing or wear due to strain can be prevented.

Moreover, forming the chromium nitride layer 50 also on the inner peripheral surface 30i of the big end 30 as in the present embodiment allows the anti-fretting property of the inner peripheral surface 30i of the big end 30 to be improved. Note that fretting at the big end 30 is superficial damage that may occur as the inner peripheral surface 30i of the big end 30 comes in contact with a bearing metal (which is provided between the inner peripheral surface 30i of the big end 30 and the crankpin).

Furthermore, the chromium nitride layer 50 being formed also on the thrust surface 30t of the big end 30 as in the present embodiment allows the anti-seizing property of the thrust surface 30t (which is a face that is in sliding contact with a crank arm) to be improved.

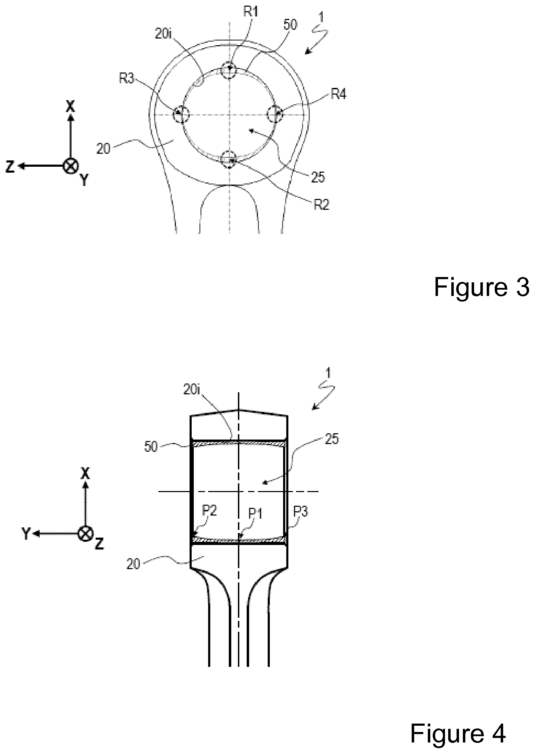

Now, with reference to Figure 3, a preferable thickness distribution of the chromium nitride layer 50 at the inner peripheral surface 20i of the small end 20 will be described. Figure 3 is a diagram showing enlarged the small end 20, where the thickness of the chromium nitride layer 50 is exaggerated for ease of understanding.

In the example shown in Figure 3, the chromium nitride layer 50 formed on the inner peripheral surface 20i of the small end 20 has a thickness distribution such that it is relatively thick along the longitudinal direction X of the connecting rod 1 but relatively thin along the width direction Z of the connecting rod 1. In other words, the thickness of the chromium nitride layer 50 (hereinafter also referred to as the "longitudinal thickness") in the regions where the inner peripheral surface 20i of the small end 20 intersects a plane (an imaginary plane) which contains the center axis of the piston pin hole 25 and which is parallel to the longitudinal direction X (i.e., a first region R1 and a second region R2 in Figure 3) is greater than the thickness (hereinafter also referred to as the "lateral thickness") of the chromium nitride layer 50 in the regions where the inner peripheral surface 20i of the small end 20 intersects a plane (an imaginary plane) which contains the center axis of the piston pin hole 25 and which is parallel to the width direction Z (i.e., a third region R3 and a fourth region R4 in Figure 3). The chromium nitride layer 50 having such a thickness distribution allows for easy introduction of a lubricant in between the inner peripheral surface 20i of the small end 20 and the piston pin, thus better preventing seizing (galling).

Depending on the method of forming the chromium nitride layer 50, the chromium nitride layer 50 may also have a thickness distribution along the axial direction Y of the connecting rod 1 (i.e., its thickness may vary along the axial direction Y). For example, when the chromium nitride layer 50 is formed by an arc ion plating described later (which is a kind of PVD technique), as shown in Figure 4, the thickness of the chromium nitride layer 50 at one transverse end and the other transverse end along the axial direction Y, i.e., orifices of the piston pin hole 25 (points P2 and P3 in Figure 4), will be greater than the thickness of the chromium nitride layer 50 at the center (point P1 in Figure 4) along the axial direction Y Based on a comparison at the center (point P1) along the axial direction Y, the lateral thickness of the chromium nitride layer 50 on the inner peripheral surface 20i of the small end 20 is preferably 20% or greater but less than 100% of its longitudinal thickness.

Moreover, the chromium nitride layer 50 may also have a thickness distribution as shown in Figure 4 at the inner peripheral surface 30i of the big end 30. In other words, depending on the method of forming the chromium nitride layer 50, the thickness of the chromium nitride layer 50 at one transverse end and the other transverse end along the axial direction Y, i.e., orifices of the crankpin hole 35, may be made greater than the thickness of the chromium nitride layer 50 at the center along the axial direction Y The chromium nitride layer 50 having such a thickness distribution at the inner peripheral surface 30i of the big end 30 makes for an improved closeness of contact between the inner peripheral surface 30i of the big end 30 and the bearing metal, thereby preventing the bearing metal from rotating together.

Next, a production method for the connecting rod 1 according to an embodiment of the present invention will be described.

The connecting rod 1 can be produced by a production method which includes: a step (connecting rod forming step)(a) of forming a connecting rod 1 having a rod main body 10, a small end 20, and a big end 30 from a titanium alloy; and a step (CrN layer forming step)(b) of forming a chromium nitride layer 50 on at least the inner peripheral surface 20i of the small end 20.

As the titanium alloy used in the connecting rod forming step (a), Ti-5AI-1 Fe alloy as mentioned above can be suitably used. Titanium alloys of various other compositions may also be used.

Formation of the chromium nitride layer 50 at CrN layer forming step (b) can be performed by arc ion plating, for example. Any PVD (Physical Vapor Deposition) technique other than arc ion plating may also be used. Arc ion plating excels in terms of providing a high ionization rate of the raw material and forming a film (layer) with high closeness of contact.

As will be understood from the foregoing description, at the CrN layer forming step (b), it is preferable that the chromium nitride layer 50 is also formed on the inner peripheral surface 30i of the big end 30. Forming the chromium nitride layer 50 on the inner peripheral surface 30i of the big end 30 allows the anti-fretting property of the inner peripheral surface 30i of the big end 30 to be improved.

In the case where the chromium nitride layer 50 is also formed on the inner peripheral surface 30i of the big end 30, it is preferable that the connecting rod forming step (a) involves a step (fine boring step)(c) of applying a cutting process (fine boring) to the inner peripheral surface 30i of the big end 30 to ensure that the inner peripheral surface 30i of the big end 30 has a ten point-average roughness Rz of 6.3 µm or less. The measurement method for ten point-average rougnes Rz is well specified in the art (e.g. JIS and ISO specification). By forming the chromium nitride layer 50 so that the ten point-average roughness Rz of the inner peripheral surface 30i of the big end 30 falls within the above range, the friction coefficient can be kept in an appropriate range, thereby preventing the bearing metal from rotating together. Moreover, an even higher anti-fretting property can be obtained with an increased surface hardness.

Moreover, in the CrN layer forming step (b), it is preferable that the chromium nitride layer 50 is also formed on the thrust surface 30t of the big end 30. Forming the chromium nitride layer 50 also on the thrust surface 30t of the big end 30 allows the anti-seizing property of the thrust surface 30t to be improved.

Furthermore, in the CrN layer forming step (b), it is preferable that the chromium nitride layer 50 is formed on the inner peripheral surface 20i of the small end 20 so as to have a thickness distribution such that it is relatively thick along the longitudinal direction X of the connecting rod 1 and relatively thin along the width direction Z of the connecting rod 1. Imparting such a thickness distribution to the chromium nitride layer 50 allows for easy introduction of a lubricant in between the inner peripheral surface 20i of the small end 20 and the piston pin, thus better preventing seizing (galling).

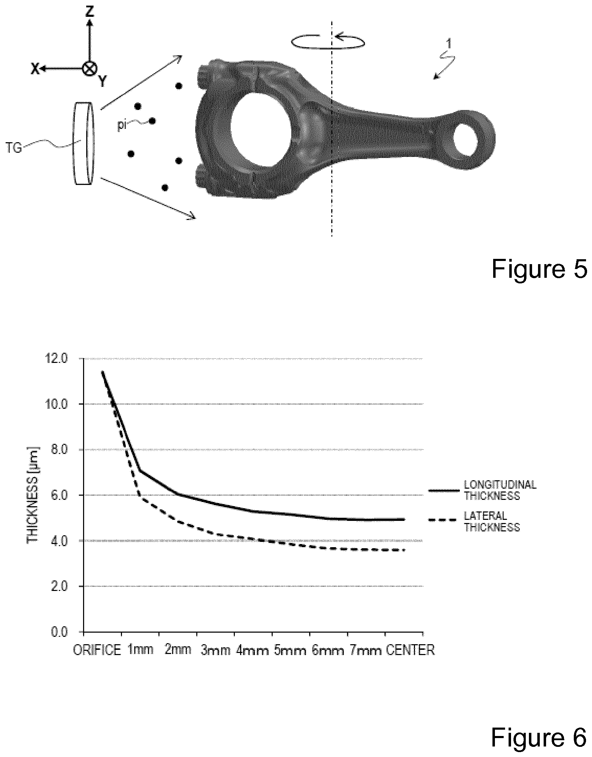

Now, with reference to Figure 5, an exemplary method of forming the chromium nitride layer 50 that can confer the aforementioned thickness distribution to the chromium nitride layer 50 will be described. Figure 5 shows an example in the case where arc ion plating (AIP technique) is employed.

In the example shown in Figure 5, positive ions pi are released from a target TG, which is positioned at a predetermined distance away from the connecting rod 1 along the longitudinal direction X, toward the connecting rod 1. In the meantime, the connecting rod 1 is rotating around an axis which is parallel to the width direction Z. Therefore, chromium nitride is easier to deposit along the longitudinal direction X, and more difficult to deposit along the width direction Z. As a result, the chromium nitride layer 50 on the inner peripheral surface 20i of the small end 20 attains a relatively large longitudinal thickness and a relatively small lateral thickness.

Figure 6 shows the longitudinal thickness (i.e., the thickness in the first region R1 and the second region R2) and the lateral thickness (i.e., the thickness in the third region R3 and the fourth region R4) of the chromium nitride layer 50, as obtained when actually forming the chromium nitride layer 50 by the method shown in Figure 5. In the graph of Figure 6, the horizontal axis represents position along the axial direction Y, and the vertical axis represents thickness.

It can be seen from Figure 6 that, in the inner peripheral surface 20i of the small end 20, the chromium nitride layer 50 has greater longitudinal thickness than lateral thickness. It can also be seen from Figure 6 that the thickness at the orifices is greater than the center at the thickness of the piston pin hole 25.

The connecting rod forming step (a) may include a step (forging step)(d) of shaping a titanium alloy via forging. By shaping a titanium alloy via forging, a connecting rod **1** with good mechanical properties can be obtained.

Moreover, the connecting rod forming step (a) may include a step (annealing step)(e) of conducting an annealing treatment, after forging step (d). By conducting an annealing treatment, it is possible to eliminate any residual stress that may have occurred in the forging step (d) (i.e., a residual stress that unfavorably affects accuracy of dimension). The annealing treatment is performed at 700°C to 800°C for 60 minutes to 90 minutes, for example.

Moreover, the connecting rod forming step (a) may include a step of removing any α case that has occurred on the surface of the titanium alloy by shot peening (shot peening step)(f), after the forging step (d). α case is an oxygen-concentrated layer which unfavorably affects processibility, ductility, fatigue characteristics, and so on, and therefore is preferably removed through a shot peening step (f). Shot peening can also introduce residual stress to the connecting rod 1, thereby enhancing the strength of the connecting rod 1.

The CrN layer forming step (b) may be performed while the surface of the connecting rod 1 is partly a surface as forged.

Moreover, in the CrN layer forming step (b), the chromium nitride layer 50 may be formed across the entire surface of the connecting rod 1, or the chromium nitride layer 50 may not be formed in portions of the surface of the connecting rod 1 where the chromium nitride layer 50 does not need to be formed. For example, when the CrN layer forming step (b) is performed after the cap portion 34 has been coupled to the rod portion 33 with the bolts 40, it is possible to mask the bearing surfaces and the screw surfaces with the bolts 40.

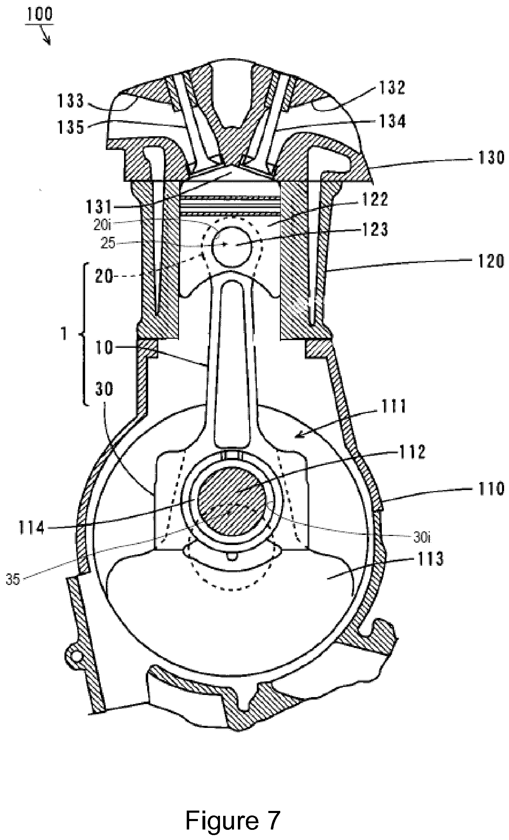

As described above, with the connecting rod 1 according to an embodiment of the present invention, the anti-seizing property of the small end 20 can be suitably improved. The connecting rod 1 according to an embodiment of the present invention can be widely used in various internal combustion engines (engines), e.g. for automotive vehicles, such as saddle-ride or straddle-type vehicles, or other mechanical applications. Figure 7 shows an example of an engine 100 including a connecting rod 1 which has been produced by the production method according to the present embodiment.

The engine 100 includes a crankcase 110, a cylinder block 120, and a cylinder head 130.

A crankshaft 111 is accommodated in the crankcase 110. The crankshaft 111 has a crankpin 112 and a crank arm 113.

A cylinder block 120 is provided above the crankcase 110. A piston 122 is allowed to reciprocate inside the cylinder bore.

A cylinder head 130 is provided above the cylinder block 120. In conjunction with the cylinder block 120 and the piston 122, the cylinder head 130 defines a combustion chamber 131. An intake valve 134 for supplying vapor to the interior of the combustion chamber 131 is provided within the intake port 132, and an exhaust valve 135 for enabling evacuation of the combustion chamber 131 is provided within the exhaust port 133.

The piston 122 and the crankshaft 111 are linked via the connecting rod 1. Specifically, a piston pin 123 of the piston 122 is inserted in the piston pin hole 25 of the small end 20 of the connecting rod 1, and the crankpin 112 of the crankshaft 111 is inserted in the crankpin hole 35 of the big end 30, thus linking the piston 122 and the crankshaft 111 together. No bushing is provided between the inner peripheral surface 20i of the small end 20 and the piston pin 123. A bearing metal 114 is provided between the inner peripheral surface 30i of the big end 30 and the crankpin 112.

The piston pin 123 preferably has a diamond-like carbon film on its surface. The diamond-like carbon film provided on the surface of the piston pin 123 provides lower friction, and thus enhanced performance and extended mileage of the engine 100.

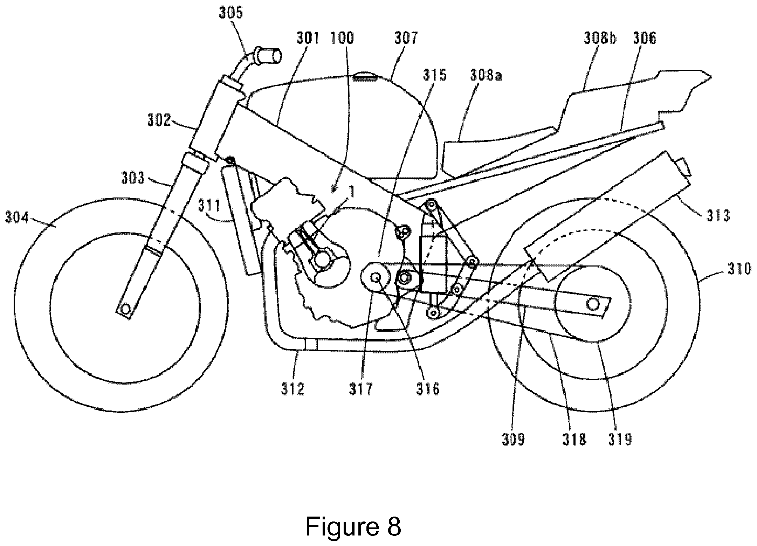

Figure 8 shows a motorcycle which incorporates the engine 100 shown in Figure 7. In the motorcycle shown in Figure 8, a head pipe 302 is provided at the front end of a body frame 301. Front forks 303 are attached to the head pipe 302, so as to be capable of swinging in the right-left direction of the vehicle. At the lower end of the front forks 303, a front wheel 304 is supported so as to be capable of rotating.

A seat rail 306 is attached at an upper portion of the rear end of the body frame 301 so as to extend in the rear direction. A fuel tank 307 is provided on the body frame 301, and a main seat 308a and a tandem seat 308b are provided on the seat rail 306.

Rear arms 309 extending in the rear direction are attached to the rear end of the body frame 301. At the rear end of the rear arms 309, a rear wheel 310 is supported so as to be capable of rotating.

At the central portion of the body frame 301, the engine 100 shown in Figure 7 is held. The engine 100 incorporates the connecting rod 1 of the present embodiment. A radiator 311 is provided in front of the engine 100. An exhaust pipe 312 is connected to an exhaust port of the engine 100, and a muffler 313 is attached to the rear end of the exhaust pipe 312.

A transmission 315 is linked to the engine 100. Driving sprockets 317 are attached on an output axis 316 of the transmission 315. The driving sprockets 317 are linked via a chain 318 to rear wheel sprockets 319 of the rear wheel 310. The transmission 315 and the chain 318 function as a transmitting mechanism for transmitting the motive power generated in the engine 100 to the driving wheel.

Although the above description illustrates a split-type connecting rod 1 whose big end 30 is split into the rod portion 33 and the cap portion 34, embodiments of the present invention are not limited to split-type connecting rods, but are also suitably used in integral-type connecting rods.

According to an embodiment of the present invention, the anti-seizing property of the small end of a titanium-alloy connecting rod can be suitably improved. A connecting rod according to an embodiment of the present invention can be widely used in various internal combustion engines (e.g., an engine for an automotive vehicle, such as a saddle-ride or straddle-type vehicle).

While the present invention has been described with respect to exemplary embodiments thereof, it will be apparent to those skilled in the art that the disclosed invention may be modified in numerous ways and may assume many embodiments other than those specifically described above. Accordingly, it is intended by the appended claims to cover all modifications of the invention that fall within the scope of the invention defined by the claims.

It will be appreciated that the term straddle-type vehicle or motor vehicle or automotive vehicle, used herein, and as used in the art, is meant to include the following terms also used in the art:
straddled vehicle, saddle-ride type vehicle or motor vehicle, saddle-straddling type vehicle or motor vehicle, and includes: motorcycles and motorbikes as well as motor tricycles and All Terrain Vehicles (ATVs), scooters, mopeds and snowmobiles.

## Claims

1. A connecting rod (1), which may be of a split type, the connecting rod (1) being made of or comprising a titanium alloy, the connecting rod (1) comprising:
a rod main body (10);
a small end (20) provided at one end of the rod main body (10); and
a big end (30) provided at another end of the rod main body (10), the connecting rod (1) further comprising
a chromium nitride layer (50) formed at least on all of an inner peripheral surface (20i) of the small end (20); wherein
the chromium nitride layer (50) formed in the regions where the inner peripheral surface (20i) of the small end (20) intersects an imaginary plane, that contains a center axis of a piston pin hole (25) and which is parallel to a longitudinal direction (X) of the rod main body (10) is greater than the thickness of the chromium nitride layer in the regions where the inner peripheral surface (20i) of the small end (20) intersects an imaginary plane that contains the center axis of the piston pin hole (25) and that is parallel to a width direction (Z) of the rod main body (10).

2. The connecting rod (1) of claim 1, wherein
the chromium nitride layer (50) is also formed on an inner peripheral surface (30i) of the big end (30); and/or
the chromium nitride layer (50) is also formed on a thrust surface (30t) of the big end (30).

3. The connecting rod (1) of any of claims 1 or 2, wherein the titanium alloy is Ti-5AI-1 Fe alloy.

4. An internal combustion engine (100) comprising the connecting rod (1) of any of claims 1 to 3.

5. The internal combustion engine (100) of claim 4, further comprising a piston pin (123) inserted in a piston pin hole (25) of the small end (20) of the connecting rod (1), the piston pin (123) having a carbon film, such as a diamond-like carbon film, on a surface thereof.

6. An automotive vehicle comprising the internal combustion engine (100) of claim 4 or 5.

7. A production method for producing a connecting rod (1), the method comprising:
step (a) of forming a connecting rod from a titanium alloy or providing a titanium alloy connection rod (1), the connecting rod (1) including a rod main body (10), a small end (20) provided at one end of the rod main body (10) and a big end (30) provided at another end of the rod main body (10); and
step (b) of forming a chromium nitride layer (50) at least on all of an inner peripheral surface (20i) of the small end (20); wherein
the chromium nitride layer (50) is formed on the inner peripheral surface (20i) of the small end (20) with a thickness distribution such that the chromium nitride layer (50) is relatively thick along a longitudinal direction (X) of the connecting rod (1) and relatively thin along a width direction (Z) of the connecting rod (1).

8. The production method for a connecting rod (1) of claim 7, wherein, at step (b), the chromium nitride layer (50) is formed also on an inner peripheral surface (30i) of the big end (30); and optionally
step (a) comprises step (c) of applying a cutting process to the inner peripheral surface (30i) of the big end (30) such that the inner peripheral surface (30i) of the big end (30) has a ten point-average roughness Rz of 6.3 µm or less.

9. The production method for a connecting rod (1) of any of claims 7 or 8, wherein, at step (b):
the chromium nitride layer (50) is formed also on a thrust surface (30t) of the big end (30).

10. The production method for a connecting rod (1) of any of claims 7 to 9, wherein step (a) comprises step (d) of shaping the titanium alloy via forging.

11. The production method for a connecting rod (1) of claim 10, wherein step (a) comprises step (e) of performing an annealing treatment, after step (d).

12. The production method for a connecting rod (1) of claim 10 or 11, wherein step (a) comprises step (f) of removing α case from a surface of the titanium alloy by shot peening, after step (d).

13. The production method for a connecting rod (1) of any of claims 10 to 12, wherein step (b) is conducted while the surface of the connecting rod (1) is partly a surface as forged.

14. The production method for a connecting rod of any of claims 7 to 13, wherein,
the big end (30) of the connecting rod (1) is split into a rod portion (33) continuing from the other end of the rod main body (10) and a cap portion (34) for coupling to the rod portion (33) ; and
step (b) is conducted with the cap portion (34) being coupled to the rod portion (33) with a bolt or fixing member (40).

## Patentansprüche

1. Verbindungsstange (1), die von einem geteilten Typ sein kann, wobei die Verbindungsstange (1) aus einer Titanlegierung besteht oder diese umfasst, wobei die Verbindungsstange (1) umfasst:
einen Stangenhauptkörper (10);
ein kleines Ende (20), das an einem Ende des Stangenhauptkörpers (10) vorgesehen ist; und
ein großes Ende (30), das an einem anderen Ende des Stangenhauptkörpers (10) vorgesehen ist, wobei die Verbindungsstange (1) ferner umfasst:
eine Chromnitridschicht (50), die mindestens auf der gesamten inneren Umfangsfläche (20i) des kleinen Endes (20) gebildet ist; wobei
die Chromnitridschicht (50) auf den Bereichen gebildet ist, wo die innere Umfangsfläche (20i) des kleinen Endes (20) eine imaginäre Ebene schneidet, welche eine Mittelachse eines Kolbenbolzenlochs (25) enthält und die parallel zu der Längsrichtung (X) des Stangenhauptkörpers (10) größer ist als die Dicke der Chromnitridschicht in den Bereichen, wo die die innere Umfangsfläche (20i ) des kleinen Endes (20) eine imaginäre Ebene schneidet, welche eine Mittelachse eines Kolbenbolzenlochs (25) enthält und die parallel zu einer Querrichtung (Z) des Stangenhauptkörpers (10) ist.

2. Verbindungsstange (1) nach Anspruch 1, wobei
die Chromnitridschicht (50) ebenfalls auf einer inneren Umfangsfläche (30i) des großen Endes (30) gebildet ist; und/oder
die Chromnitridschicht (50) ebenfalls auf einer Druckfläche (30t) des großen Endes (30) gebildet ist.

3. Verbindungsstange (1) nach Anspruch 1 oder 2, wobei die Titanlegierung eine Ti-5Al-1 Fe-Legierung ist.

4. Verbrennungsmotor (100), umfassend die Verbindungsstange (1) nach einem der Ansprüche 1 bis 3.

5. Verbrennungsmotor (100) nach Anspruch 4, ferner umfassend einen Kolbenbolzen (123), der in ein Kolbenbolzenloch (25) des kleinen Endes (20) der Verbindungsstange (1) eingesetzt ist, wobei der Kolbenbolzen (123) auf einer Oberfläche davon einen Carbon-Film aufweist, wie beispielsweise einen diamantähnlichen Carbon-Film.

6. Kraftfahrzeug mit der Brennkraftmaschine (100) nach Anspruch 4 oder 5.

7. Herstellungsverfahren zum Herstellen einer Verbindungsstange (1), wobei das Verfahren umfasst:
Schritt (a) des Ausbildens einer Verbindungsstange aus einer Titanlegierung oder des Bereitstellens einer Titanlegierungs-Verbindungsstange (1), wobei die Verbindungsstange (1) einen Stangenhauptkörper (10), ein kleines Ende (20), das an einem Ende des Stabhauptkörpers (10) vorgesehen ist, und ein großes Ende (30), das an einem anderen Ende des Stabhauptkörpers (10) vorgesehen ist, einschliesst; und
Schritt (b) des Ausbildens einer Chromnitridschicht (50) mindestens auf einer gesamten inneren Umfangsfläche (20i) des kleinen Endes (20), wobei
die Chromnitridschicht (50) auf der inneren Umfangsoberfläche (20i) des kleinen Endes (20) mit einer solchen Dickenverteilung ausgebildet ist, dass die Chromnitridschicht (50) entlang einer Längsrichtung (X) der Verbindungsstange (1) relativ dick ist und entlang einer Breitenrichtung (Z) der Verbindungsstange (1) relativ dünn ist.

8. Herstellungsverfahren für eine Verbindungsstange (1) nach Anspruch 7, wobei in Schritt (b) die Chromnitridschicht (50) auch auf einer inneren Umfangsfläche (30i) des großen Endes (30) ausgebildet ist; und wahlweise
Schritt (a) Schritt (c) des Anwendens eines Schneideprozesses auf die innere Umfangsoberfläche (30i) des großen Endes (30) umfasst, so dass die innere Umfangsoberfläche (30i) des großen Endes (30) eine Zehn Punkt-durchschnittliche Rauheit Rz von 6,3 µm oder weniger aufweist.

9. Herstellungsverfahren für eine Verbindungsstange (1) nach einem der Ansprüche 7 oder 8, wobei in Schritt (b):
die Chromnitridschicht (50) auch auf einer Druckfläche (30t) des großen Endes (30) ausgebildet ist.

10. Herstellungsverfahren für eine Verbindungsstange (1) nach einem der Ansprüche 7 bis 9, Schritt (a) Schritt (d) des Formgebens der Titanlegierung durch Schmieden umfasst.

11. Herstellungsverfahren für eine Verbindungsstange (1) nach Anspruch 10, wobei Schritt (a) Schritt (e) zum Ausführen einer Glühbehandlung nach Schritt (d) umfasst.

12. Herstellungsverfahren für eine Verbindungsstange (1) nach Anspruch 10 oder 11, wobei Schritt (a) Schritt (f) des Entfernens einer Randschicht von einer Oberfläche der Titanlegierung durch Kugelstrahlen nach Schritt (d) umfasst.

13. Herstellungsverfahren für eine Verbindungsstange (1) nach einem der Ansprüche 10 bis 12, wobei Schritt (b) ausgeführt wird, während die Oberfläche der Verbindungsstange (1) teilweise eine geschmiedete Oberfläche ist.

14. Herstellungsverfahren für eine Verbindungsstange nach einem der Ansprüche 7 bis 13, wobei
das große Ende (30) der Verbindungsstange (1) in einen Stangenabschnitt (33), der sich vom anderen Ende des Stangenhauptkörpers (10) fortsetzt, und in einen Kappenabschnitt (34) zum Koppeln mit dem Stangenabschnitt (33) geteilt ist; und
Schritt (b) ausgeführt wird, indem der Kappenabschnitt (34) mit dem Stangenabschnitt (33) durch einen Bolzen- oder ein Befestigungselement (40) verbunden wird.

## Revendications

1. Bielle (1), laquelle peut être d'un type à séparation, la bielle (1) étant réalisée en un alliage de titane ou comprenant celui-ci, la bielle (1) comprenant :
un corps principal de tige (10) ;
une petite extrémité (20) qui est prévue au niveau d'une extrémité du corps principal de tige (10) ; et
une grosse extrémité (30) qui est prévue au niveau d'une autre extrémité du corps principal de tige (10), la bielle (1) comprenant en outre :
une couche en nitrure de chrome (50) qui est formée au moins sur la totalité d'une surface périphérique interne (20i) de la petite extrémité (20) ; dans laquelle :
la couche en nitrure de chrome (50), qui est formée dans les régions au niveau desquelles la surface périphérique interne (20i) de la petite extrémité (20) intersecte un plan imaginaire qui contient un axe central d'un trou d'axe de piston (25) et qui est parallèle à une direction longitudinale (X) du corps principal de tige (10), présente une épaisseur plus importante que l'épaisseur de la couche en nitrure de chrome dans les régions au niveau desquelles la surface périphérique interne (20i) de la petite extrémité (20) intersecte un plan imaginaire qui contient l'axe central du trou d'axe de piston (25) et qui est parallèle à une direction de largeur (Z) du corps principal de tige (10).

2. Bielle (1) selon la revendication 1, dans laquelle :
la couche en nitrure de chrome (50) est également formée sur une surface périphérique interne (30i) de la grosse extrémité (30) ; et/ou
la couche en nitrure de chrome (50) est également formée sur une surface de poussée (30t) de la grosse extrémité (30).

3. Bielle (1) selon l'une quelconque des revendications 1 ou 2, dans laquelle l'alliage de titane est l'alliage Ti-5Al-1Fe.

4. Moteur à combustion interne (100) comprenant la bielle (1) selon l'une quelconque des revendications 1 à 3.

5. Moteur à combustion interne (100) selon la revendication 4, comprenant en outre un axe de piston (123) qui est inséré à l'intérieur d'un trou d'axe de piston (25) de la petite extrémité (20) de la bielle (1), l'axe de piston (123) comportant un film en carbone, tel qu'un film en carbone similaire au diamant, sur sa surface.

6. Véhicule automobile comprenant le moteur à combustion interne (100) selon la revendication 4 ou 5.

7. Procédé de fabrication pour fabriquer une bielle (1), le procédé comprenant :
une étape (a) consistant à former une bielle à partir d'un alliage de titane ou à fournir une bielle (1) en alliage de titane, la bielle (1) incluant un corps principal de tige (10), une petite extrémité (20) qui est prévue au niveau d'une extrémité du corps principal de tige (10) et une grosse extrémité (30) qui est prévue au niveau d'une autre extrémité du corps principal de tige (10) ; et
une étape (b) consistant à former une couche en nitrure de chrome (50) au moins sur la totalité d'une surface périphérique interne (20i) de la petite extrémité (20) ; dans lequel :
la couche en nitrure de chrome (50) est formée sur la surface périphérique interne (20i) de la petite extrémité (20) selon une distribution d'épaisseurs qui est telle que la couche en nitrure de chrome (50) est relativement épaisse suivant une direction longitudinale (X) de la bielle (1) et est relativement mince suivant une direction de largeur (Z) de la bielle (1).

8. Procédé de fabrication d'une bielle (1) selon la revendication 7, dans lequel au niveau de l'étape (b), la couche en nitrure de chrome (50) est formée également sur une surface périphérique interne (30i) de la grosse extrémité (30) ; et en option :
l'étape (a) comprend une étape (c) consistant à appliquer un processus de coupe à la surface périphérique interne (30i) de la grosse extrémité (30) de telle sorte que la surface périphérique interne (30i) de la grosse extrémité (30) présente une rugosité moyenne en dix points Rz de 6,3 µm ou moins.

9. Procédé de fabrication d'une bielle (1) selon l'une quelconque des revendications 7 ou 8, dans lequel, au niveau de l'étape (b) :
la couche en nitrure de chrome (50) est formée également sur une surface de poussée (30t) de la grosse extrémité (30).

10. Procédé de fabrication d'une bielle (1) selon l'une quelconque des revendications 7 à 9, dans lequel l'étape (a) comprend une étape (d) consistant à conformer l'alliage de titane via un forgeage.

11. Procédé de fabrication d'une bielle (1) selon la revendication 10, dans lequel l'étape (a) comprend une étape (e) consistant à réaliser un traitement de recuit, après l'étape (d).

12. Procédé de fabrication d'une bielle (1) selon la revendication 10 ou 11, dans lequel l'étape (a) comprend une étape (f) consistant à enlever une enveloppe d'une surface de l'alliage de titane au moyen d'un grenaillage, après l'étape (d).

13. Procédé de fabrication d'une bielle (1) selon l'une quelconque des revendications 10 à 12, dans lequel l'étape (b) est mise en oeuvre tandis que la surface de la bielle (1) est partiellement une surface forgée.

14. Procédé de fabrication d'une bielle selon l'une quelconque des revendications 7 à 13, dans lequel :
la grosse extrémité (30) de la bielle (1) est séparée en une partie de tige (33) qui est une continuation de l'autre extrémité du corps principal de tige (10) et en une partie de capuchon (34) pour un couplage sur la partie de tige (33) ; et
l'étape (b) est mise en oeuvre tandis que la partie de capuchon (34) est couplée à la partie de tige (33) à l'aide d'un boulon ou élément de fixation (40).
